**Europäisches Patentamt**

**European Patent Office**

**Office européen des brevets**

(19)

(11) Veröffentlichungsnummer: **0 274 561 B1**

# EUROPÄISCHE PATENTSCHRIFT

(12)

(45) Veröffentlichungstag der Patentschrift: **16.10.91**

(51) Int. Cl.⁵: **A47J 31/057, A47J 31/00**

(21) Anmeldenummer: **87108813.4**

(22) Anmeldetag: **19.06.87**

(54) **Kaffee- oder Teemaschine.**

(30) Priorität: **22.12.86 DE 3643878**

(43) Veröffentlichungstag der Anmeldung:
**20.07.88 Patentblatt 88/29**

(45) Bekanntmachung des Hinweises auf die
Patenterteilung:
**16.10.91 Patentblatt 91/42**

(84) Benannte Vertragsstaaten:
**AT BE CH ES FR GB LI NL SE**

(56) Entgegenhaltungen:
**EP-A- 0 224 041**
**DE-A- 1 429 799**
**DE-U- 7 811 283**
**FR-A- 568 376**
**US-A- 3 371 593**

(73) Patentinhaber: **Melitta Haushaltsprodukte
GmbH & Co. Kommanditgesellschaft
Ringstrasse 99
W-4950 Minden 1(DE)**

(72) Erfinder: **Häuslein, Reinhard
Lange Wand 26
W-4950 Minden(DE)**

(74) Vertreter: **Stracke, Alexander, Dipl.-Ing. et al
Jöllenbecker Strasse 164
W-4800 Bielefeld 1(DE)**

## Beschreibung

Die vorliegende Erfindung betrifft eine Kaffee- oder Teemaschine mit einem Frischwasserbehälter, einem nach dem Schwerkraftprinzip arbeitenden Durchlauferhitzer, einem Steigrohr sowie einer Überlaufeinrichtung zur Einleitung des erhitzten Wassers in ein oberhalb einer Kanne zur Aufnahme des Filtrates angeordnetes Filtergefäß, wobei das Steigrohr in einen mittels eines Saughebers periodisch entleerbaren, einen Teil der Überlaufeinrichtung bildenden Zwischenbehälter einmündet.

Aus dem DE-78 11 283 ist eine gattungsgemäße Kaffeemaschine bekannt. Damit der Zwischenbehälter vollständig entleert wird, ist im Frischwasserbehälter ein Schwimmer angeordnet, der über ein Gestänge einen Stift nach oben verfährt, wenn der Frischwasserbehälter leer oder annähernd leer ist. Dadurch wird eine Ablauföffnung im Boden des Zwischenbehälters freigegeben.

Aus der FR-PS 568 376 ist eine Maschine zum Kochen von Kaffee bekannt, die einen Vorratsbehälter größeren Volumens aufweist. In einem Ablaufstutzen ist ein Ventil angeordnet, um die Auslauföffnung zu verschließen. Von dem Ablaufstutzen läuft das kalte Wasser in ein Kochgefäß und von dort aus über einen U-förmigen Saugheber in das Filtergefäß, welches auf eine Kaffeekanne gestellt ist. Das Kochgefäß ist mit einer elektrischen Widerstandsheizung ausgerüstet, deren Wicklungen im unteren Bereich um den Rumpf des Kochgefäßes herumgelegt sind. Das Problem der Restmengenentleerung ist in dieser Patentschrift nicht gelöst.

Der vorliegenden Erfindung liegt die Aufgabe zugrunde, eine gattungsgemäße Kaffeemaschine in konstruktiv einfacher Weise so auszubilden, daß beim Ende des Brühvorganges die vollständige Entleerung des Zwischenbehälters sichergestellt ist, ohne daß störanfällige Bauteile Verwendung finden.

Die gestellte Aufgabe wird erfindungsgemäß dadurch gelöst, daß der Zwischenbehälter mit einem Entlüftungsrohr versehen und ansonsten allseitig geschlossen ist, und daß das Entlüftungsrohr einen derart geringen Querschnitt aufweist, daß ein Abbau des bei Verdampfung von Restwassermengen im Durchlauferhitzer innerhalb des Zwischenbehälters entstehenden Überdruckes durch das Entlüftungsrohr verhindert ist. Dadurch wird die Restwasserentleerung ohne zusätzliche mechanische Bauteile, verschließbare oder freigehbare Öffnungen o.a. mechanische Hilfsmittels erreicht. Dies erfolgt allein durch die Verwendung des bis auf das Entlüftungsrohr allseitig geschlossenen Zwischenbehälters und durch die Maßgabe, das Entlüftungsrohr in seinem Querschnitt so zu gestalten, daß der Abbau eines Überdruckes, der bei der Verdampfung von Restwassermengen im Durchlauferhitzer innerhalb des Zwischenbehälters entsteht, verhindert wird. Demzufolge werden keinerlei mechanisch betätigbare Teile benötigt, wodurch auch die Störeinflüsse erheblich verringert werden. Die erfindungsgemäße Kaffee- oder Teemaschine ermöglicht unter Beibehaltung des ansich bekannten einfachen Aufbaues ein vorteilhaftes Brühverfahren und gleichzeitig die sichere Entleerung von Restwassermengen im Zwischenbehälter. Den Dampfdruck zum Austreiben der Restwassermenge im Zwischenbehälter zu benutzen ist eine Lösung, die auch die Betriebsweise in keiner Weise negativ beeinflußt.

Weitere Merkmale der Erfindung sind Gegenstand von Unteransprüchen. In den beigefügten Zeichnungen sind Ausführungsbeispiele der Erfindung dargestellt, die im folgenden näher beschrieben werden.

Es zeigen:

Fig. 1 eine schematische Darstellung einer Kaffee- oder Teemaschine gemäß vorliegender Erfindung,

Fig. 2 eine Kaffee- oder Teemaschine nach einem weiteren Ausführungsbeispiel der Erfindung.

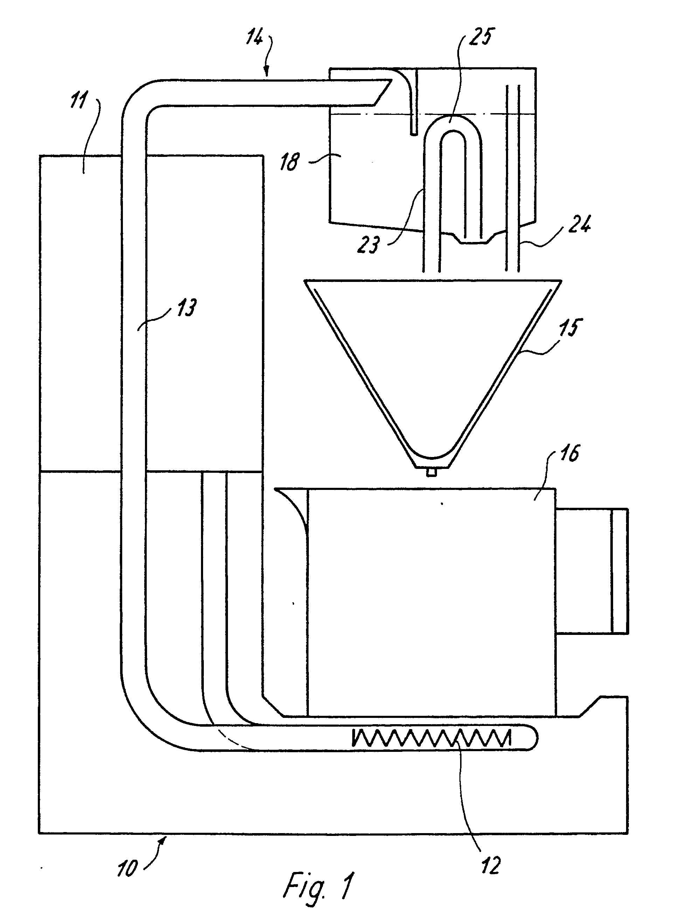

In Figur 1 ist mit dem Bezugszeichen 10 insgesamt eine Kaffee- oder Teemaschine bezeichnet.

Diese Kaffee- oder Teemaschine 10 weist den prinzipiellen Aufbau von sogenannten Haushalts-Kaffe- oder Teemaschinen auf. In einen Frischwasserbehälter 11 wird eine vorbestimmte Menge von kaltem Wasser eingefüllt. Dieses kalte Wasser wird durch einen Durchlauferhitzer 12 erhitzt und über ein Steigrohr 13 sowie eine insgesamt mit dem Bezugszeichen 14 versehene Überlaufeinrichtung in ein Filtergefäß 15 gefördert, welches sich oberhalb einer das Filtrat aufnehmenden Kanne 16 befindet.

Die Kanne 16 steht üblicherweise auf einer Warmhalteplatte 17.

Die überlaufeinrichtung 14 ist mit einem Zwischenbehälter 18 ausgestattet, dessen Besonderheiten im Folgenden näher erläutert werden.

Der Zwischenbehälter 18 ist mit einem Saugheber 23 ausgestattet, der auslaufseitig in das Filtergefäß 15 einmündet.

Außerdem ist der Zwischenbehälter 18 mit einem Entlüftungsrohr 24 versehen. Dieses Entlüftungsrohr 24 erstreckt sich in vertikaler Richtung über den Bereich der Rohrkrümmung 25 des Saughebers 23 hinaus. Ansonsten ist der Zwischenbehälter 18 allseitig geschlossen.

Die Funktion dieser Konstruktion ist wie folgt:

Zunächst wird erhitztes Wasser in den Zwischenbehälter 18 gefördert. Ist die Füllstandshöhe im Zwischenbehälter 18 so groß, daß der Rohrkrümmer 25 des Saughebers 23 gefüllt ist, tritt der Saugheber 23 in Aktion und entleert den Zwischenbehälter 18 selbsttätig.

Für den Fall, daß beim letzten Förderzyklus keine vollständige Füllung des Zwischenbehälters 18 mehr erfolgen kann, wird durch Dampfdruck die im Zwischenbehälter 18 befindliche Restwassermenge durch den Saugheber 23 in das Filtergefäß 15 hinein gedrückt. Der Querschnitt des Entlüftungsrohres 24 ist zweckmäßigerweise so gewählt, daß dieses Entlüftungsrohr 24 die durch die Verdampfung von Restwassermengen im Durchlauferhitzer 12 entstehende Dampfmenge nicht abführen kann, so daß, wie vorstehend beschrieben, ein Förderdruck für im Zwischenbehälter 18 befindliche Restwassermengen entsteht.

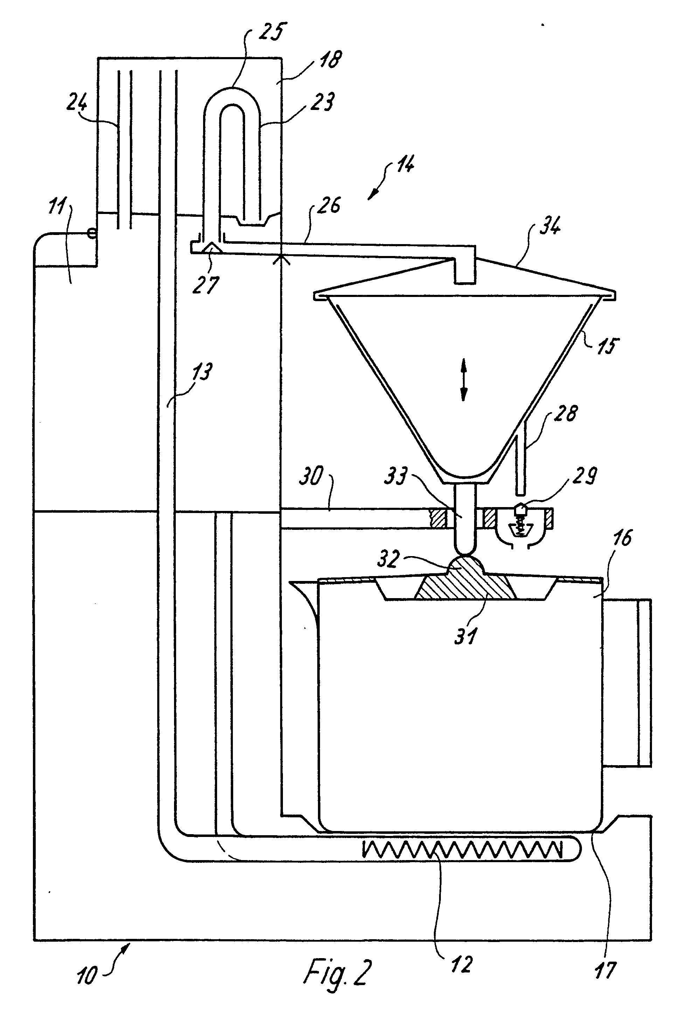

Figur 2 zeigt ein weiteres Ausführungsbeispiel der Erfindung mit einem Saugheber 23 zur Entleerung des Zwischenbehälters 18. Bei diesem Ausführungsbeispiel ist der Zwischenbehälter 18 oberhalb des Frischwasserbehälters 11 angeordnet. Das Steigrohr 13 mündet wieder in diesen Zwischenbehälter 18 ein. Der Zwischenbehälter 18 ist mit einem zum Frischwasserbehälter 11 zurückführenden Entlüftungsrohr 24 versehen, welches wiederum oberhalb des Rohrkrümmers 25 endet.

Das auslaufseitige Ende des Saughebers 23 mündet in ein Überlaufrohr 26 ein, welches zum Filtergefäß 15 führt.

Dieses Überlaufrohr 26 ist pendelnd gelagert und im Einmündungsbereich des Saughebers 23 mit einem Dichtkegel 27 ausgestattet.

Das Filtergefäß 15 ist in bekannter Weise mit einem Saufheber-Auslauf 28 versehen, der sich in einer Achsrichtung mit einem federbelasteten Schließventil 29 befindet. Dieses Schließventil 29 ist an einem Ausleger 30 des Gehäuses der Kaffee- oder Teemaschine 10 angeordnet.

Das Filtergefäß 15 ist vertikal bewegbar im Sinne des Doppelpfeiles in Figur 2.

Die das Filtrat aufnehmende Kanne 16 ist mit einem Deckel 31 versehen, der in seiner Mitte einen Schaltnocken 32 aufweist. Dieser Schaltnocken 32 wirkt mit einem Stößel 33 des Filtergefäßes 15 zusammen.

Die Funktion der in Figur 2 gezeigten Kaffee- oder Teemaschine ist wie folgt:

Befindet sich die Kanne 16 mit ihrem Deckel 31 auf ihrem bestimmungsgemäßen Platz auf der Wärmhalteplatte 17, so wird durch den Schaltnocken 32 über den Stößel 33 das Filtergefäß 15 vertikal angehoben in seiner aus Figur 2 ersichtliche Stellung. In dieser Stellung ist der Saugheber-Auslauf 28 des Filtergefäßes 15 vom Schließventil 29 abgehoben, das heißt, der Saugheber - Auslauf 28 ist frei. Über das ebenfalls mit einem Deckel 34 versehene Filtergefäß 15 ist außerdem das schwenkbar gelagerte Überlaufrohr 26 derart verschwenkt, daß der Dichtkegel 27 von der Auslauföffnung des Saughebers 23 abgehoben hat, so daß die Auslauföffnung des Saughebers 23 frei ist. In dieser in Figur 2 gezeigten Stellung kann erhitztes Brühwasser aus dem Zwischenbehälter 18 in das Filtergefäß 15 gefördert werden, und zwar durch den Saugheber 23 und über das Überlaufrohr 26.

Wird nun bewußt oder durch eine Fehlbedienung das Gefäß 16 entnommen, so bewegt sich das Filtergefäß 15 nach unten, der Saugheber-Auslauf 28 wird durch das Schließventil 29 verschlossen, der Dichtkegel 27 verschließt die Auslauföffnung des Saughebers 23, so daß einerseits kein weiteres Heißwasser in das Filtergefäß 15 gelangt und andererseits auch kein Filtrat aus dem Filtergefäß 15 abfließen kann.

Da gleichzeitig weiterhin Brühwasser in das Zwischengefäß 18 gefördert werden kann, ist, worauf schon hingewiesen wurde, die Entlüftungsbohrung 24 in den Frischwasserbehälter 11 zurückgeführt, das heißt, das überschüssiges erhitztes Wasser über die Entlüftungsbohrung 24 wieder in den Frischwasserbehälter 11 zurückfließen kann.

**Patentansprüche**

1. Kaffee- oder Teemaschine mit einem Frischwasserbehälter (11), einem nach dem Schwerkraftprinzip arbeitenden Durchlauferhitzer (12), einem Steigrohr (13) sowie einer Überlaufeinrichtung (14) zur Einleitung des erhitzten Wassers in ein oberhalb einer Kanne (16) zur Aufnahme des Filtrates angeordnetes Filtergefäß (15), wobei das Steigrohr (13) in einen mittels eines Saughebers (23) periodisch entleerbaren, einen Teil der Überlaufeinrichtung bildenden Zwischenbehälter einmündet, **dadurch gekennzeichnet,** daß der Zwischenbehälter (18) mit einem Entlüftungsrohr (24) versehen und ansonsten allseitig geschlossen ist, und daß das Entlüftungsrohr (24) einen derart geringen Querschnitt aufweist, daß ein Abbau des bei Verdampfung von Restwassermengen im Durchlauferhitzer (12) innerhalb des Zwischenbehälters (18) entstehenden Überdruckes durch das Entlüftungsrohr (24) verhindert ist.

2. Kaffee- oder Teemaschine nach Anspruch 1, dadurch gekennzeichnet, daß sich das Entlüftungsrohr (24) über den Rohrkrümmer (25) des Saughebers (23) hinaus nach oben erstreckt.

3. Kaffee- oder Teemaschine nach Anspruch 1 oder 2, dadurch gekennzeichnet, daß der Auslaufbereich des Saughebers (23) in ein schwenkbar gelagertes und mit einem in einer Schwenkendlage den Auslauf des Saughebers (23) verschließenden Dichtkegel (27) versehenes Überlaufrohr (26) einmündet.

4. Kaffee- oder Teemaschine nach einem oder mehreren der vorhergehenden Ansprüche, dadurch gekennzeichnet, daß das Entlüftungsrohr (24) auslaufseitig in den Frischwasserbehälter (11) einmündet.

## Claims

1. Coffee or tea machine with a fresh water container (11), a throughflow heater (12) operating according to the gravity principle, a rising pipe (13) as well as an overflow device (14) for the introduction of the heated water into a filter vessel (15) arranged above a jug (16) for the reception of the filtrate, wherein the rising pipe (13) opens by means of a siphon (23) into a periodically emptiable intermediate container forming a part of the overflow device, characterised thereby that the intermediate container (18) is provided with a ventilating pipe (24) and otherwise closed at all sides, and that the ventilating pipe (24) has a small cross-section in the manner that a build-up of the excess pressure, which arises within the intermediate container (18) on vaporisation of residual water quantities in the throughflow heater (12), is prevented by the ventilating pipe (24).

2. Coffee or tea machine according to claim 1, characterised thereby that the ventilating pipe (24) extends upwardly above the pipe bend (25) of the siphon (23).

3. Coffee or tea machine according to claim 1 or 2, characterised thereby that the outlet region of the siphon (23) opens into a pivotably mounted overflow pipe (26) provided with a sealing cone (27) closing the outlet of the siphon (23) in a pivot end position.

4. Coffee or tea machine according to one or more of the preceding claims, characterised thereby that the ventilating pipe (24) opens at the outlet end into the fresh water container (11).

## Revendications

1. Machine à café ou à thé avec un réservoir d'eau froide (11), un serpentin de chauffage (12) fonctionnant selon le principe de la pesanteur, un tube de montée (13), ainsi qu'un dispositif de tropplein (14) pour l'introduction de l'eau bouillante dans un vase de filtrage (15) placé au-dessus d'un pot (16) destiné à recueillir le produit de la filtration, le tube de montée (13) étant périodiquement vidé au moyen d'un siphon d'aspiration (23) débouchant dans un réservoir intermédiaire partie intégrante du dispositif de trop-plein, caractérisée on ce que le réservoir intermédiaire (18) est muni d'un tue d'aération (24) et est, en outre, clos de tous les côtés, et que le tube d'aération (24) a une section transversale suffisamment faible pour empêcher à l'intérieur du réservoir intermédiaire l'apparition d'une surpression liée à la vaporisation de la quantité d'eau restant dans le serpentin de chauffage (12) et au tube d'aération (24).

2. Machine à café ou à thé conforme à la revendication 1, caractérisée en ce que le tube d'aération (24) s'étend vers le haut au-delà du coude tubulaire (25) du siphon d'aspiration (23).

3. Machine à café ou à thé conforme à la revendication 1 ou 2, caractérisée en ce que la sortie du siphon d'aspiration (23) débouche dans un tube de trop-plein (26) pivotant et conçu avec une bille d'étanchéité (27) fermant l'extrémité orientable de sortie du siphon d'aspiration (23).

4. Machine à café ou à thé conforme à l'une ou plusieurs des revendications ci-dessus, caractérisée en ce que le tube d'aération (24) débouche du côté de la sortie dans le réservoir d'eau froide (11).

*Fig. 1*

EP 0 274 561 B1

*Fig. 2*